# EUROPEAN PATENT APPLICATION

(11) **EP 4 818 801 A1**
(43) Date of publication of application: **07.10.2026**
(21) Application number: 26162280.7
(22) Date of filing: 04.03.2026
(51) Int. Cl.: G02F 1/225, G02F 1/21

(54) **MACH-ZEHNDER INTERFEROMETER TOLERANT TO PROCESS AND ENVIRONMENTAL VARIATIONS**

(30) Priority: 03.04.2025 US 202519169784
(71) Applicant: InfiniLink Inc., 11835 New Cairo (EG)
(72) Inventor: THABET MOHAMED, Alaa Eldeen Fathy Rezk, NEW CAIRO (EG); ELFIKY, Eslam Ahmed Saber, NEW CAIRO (EG)
(74) Representative: Grünecker Patent- und Rechtsanwälte PartG mbB

(57) **Abstract**

A Mach-Zehnder interferometer includes a first waveguide having a first plurality of phase shifting segments and a second waveguide coupled to the first waveguide by a input coupler at a first end of the second waveguide and an output coupler at a second end of the second waveguide opposite the first end and having a second plurality of phase shifting segments. To minimize effects of process and/or environmental variations on the Mach-Zehnder interferometer the first and second waveguides may be made tolerant to various process and/or environmental variations. A first phase shifting segment of the first waveguide and a first phase shifting segment of the segment may form a corresponding pair, wherein the first corresponding pair is configured to provide wavelength tolerance to wavelength shifts of an optical signal propagating through the first and second waveguides caused by a first parameter.

## Description

### BACKGROUND

A Mach-Zehnder interferometer is a device used to determine relative phase shifts between two collimated beams. Mach-Zehnder interferometers have a multitude of uses including, but not limited to, wavelength division multiplexing and demultiplexing.

### SUMMARY

According to an aspect described herein, a Mach-Zehnder interferometer is provided. The Mach-Zehnder interferometer comprises: a first waveguide comprising a first plurality of phase shifting segments; and a second waveguide coupled to the first waveguide by a input coupler at a first end of the second waveguide and an output coupler at a second end of the second waveguide opposite the first end, the second waveguide comprising a second plurality of phase shifting segments, wherein: a first segment of the first plurality of phase shifting segments and a first segment of the second plurality of phase shifting segments form a first corresponding pair, wherein the first corresponding pair is configured to provide wavelength tolerance to wavelength shifts of an optical signal propagating through the first and second waveguides caused by a first parameter.

In some embodiments, the first parameter comprises variations in widths of the phase shifting segments of the corresponding pair. In some embodiments, the first segment of the first plurality of phase shifting segments in the first corresponding pair comprises a first width and a first length; and the first segment of the second plurality of phase shifting segments in the first corresponding pair comprises a second width and a second length, wherein the second width and/or second length are determined based on the first width and first length to provide the wavelength tolerance to the first parameter.

In some embodiments, a second segment of the first plurality of phase shifting segments and a second segment of the second plurality of phase shifting segments form a second corresponding pair; and the first corresponding pair and second corresponding pair are configured to provide wavelength tolerance to wavelength shifts of the optical signal caused by a second parameter. In some embodiments, the second parameter comprises variations in heights of the phase shifting segments of the first and second corresponding pairs. In some embodiments, the first and second waveguides include a plurality of corresponding pairs of segments from the first plurality of phase shifting segments and the second plurality of phase shifting segments; and the plurality of corresponding pairs are configured to provide wavelength tolerance to wavelength shifts of the optical signal caused by a third parameter based on an ensemble comprising at least a subset of the plurality of corresponding pairs.

In some embodiments, the third parameter comprises temperature. In some embodiments, the Mach-Zehnder interferometer is formed on a temperature-insensitive material. In some embodiments, the temperature-insensitive material comprises silicon nitride.

According to an aspect described herein, a wavelength division multiplexer is provided. The wavelength division multiplexer comprises: a plurality of Mach-Zehnder interferometers each configured to receive optical signals of different wavelengths to be combined into a single output, wherein: a first Mach-Zehnder interferometer of the plurality of Mach-Zehnder interferometers comprises a first waveguide and a second waveguide having a plurality of corresponding pairs of phase shifting segments; and the first Mach-Zehnder interferometer is configured to be wavelength tolerant to wavelength shifts in optical signals caused by one or more parameters based at least in part on dimensions of the phase shifting segments of the corresponding pairs.

In some embodiments, the one or more parameters comprise at least one of: width variations of the phase shifting segments, height variations of the phase shifting segments, temperature of an environment in which the multiplexer is operating, and/or pressure of the environment. In some embodiments, the wavelength division multiplexer is formed on a temperature-insensitive material. In some embodiments, the temperature-insensitive material comprises silicon nitride.

According to an aspect described herein, a demultiplexer is provided. The demultiplexer comprises: a plurality of Mach-Zehnder interferometers configured to receive an optical signal having light of different wavelengths and configured to separate the optical signal into a plurality of outputs based on the different wavelengths, wherein: a first Mach-Zehnder interferometer of the plurality of Mach-Zehnder interferometers comprises a first waveguide and a second waveguide having a plurality of corresponding pairs of phase shifting segments; and the first Mach-Zehnder interferometer is configured to be wavelength tolerant to wavelength shifts in optical signals caused by one or more parameters based at least in part on dimensions of the phase shifting segments of the corresponding pairs.

In some embodiments, the one or more parameters comprise at least one of: width variations of the phase shifting segments, height variations of the phase shifting segments, temperature of an environment in which the demultiplexer is operating, and/or pressure of the environment. In some embodiments, the demultiplexer is formed on a temperature-insensitive material. In some embodiments, the temperature-insensitive material comprises silicon nitride.

### BRIEF DESCRIPTION OF THE DRAWINGS

Various aspects and embodiments of the application will be described with reference to the following figures. It should be appreciated that the figures are not necessarily drawn to scale. Items appearing in multiple figures are indicated by the same or similar reference number in all the figures in which they appear.
FIG. 1 shows an example Mach-Zehnder interferometer being tolerant to process and/or environmental variations, according to some embodiments.
FIG. 2 shows an example Mach-Zehnder interferometer being tolerant to process and/or environmental variations, according to some embodiments.
FIG. 3 shows an example Mach-Zehnder interferometer being tolerant to process and/or environmental variations, according to some embodiments.
FIG. 4 shows an example photonic system optically coupling two photonic integrated circuit employing wavelength division multiplexers and demultiplexers, according to some embodiments.
FIG. 5 shows an example wavelength division multiplexer employing a plurality of process and/or environmental tolerant Mach-Zehnder interferometers, according to some embodiments.
FIG. 6 shows an example demultiplexer employing a plurality of process and/or environmental tolerant Mach-Zehnder interferometers, according to some embodiments.

### DETAILED DESCRIPTION

Optical fiber systems have been developed over the last few decades and have been utilized in different fields such as longhaul transmission, fiber to home, and optical sensing applications. Optical transceivers that transmit and/or receive optical signals enable data transmission using optical signals encoded with data. For example, a portion of input data may be used to modulate the amplitude of an optical signal-e.g., an optical signal of a specific wavelength produced by a laser-to encode the input data into the optical signal. In many optical data transmission systems, the systems employ in parallel a number of unidirectional, single mode fibers that are each used to transmit an optical signal of a single wavelength, which has the potential to limit the transmission capacity of the system. Such links are based on standards and agreements providing specifications of the optical transceivers, e.g., IEEE ethernet standards, multi-source agreements. The standards may provide power, size, and cost standards optimized in specific form factors such as quad small form factors (QSFP). The specifications defined in the standards may provide low cost, low power consumption, high yield, and small form factor requirements.

To further increase the system capacity, wavelength division multiplexing (WDM) has been utilized which enables optical signals of multiple wavelengths to be transmitted using the same fiber channel. For example, a photonic system may comprise two or more photonic integrated circuits (PICs) optically connected via an optical fiber channel. A first PIC of the two PICs may employ a wavelength division multiplexer configured to receive multiple optical signals of different wavelengths (λ₁, λ₂, ... , λ_{N}) encoded with data (e.g., via amplitude modulation) and output the optical signals as a combined optical signal to the same optical fiber channel optically coupling the two PICs. The second PIC may employ a demultiplexer configured to receive the combined optical signal and split the optical signal of each wavelength to a different output channel, so that each optical signal can be detected and processed.

In many such optical systems, the wavelength division multiplexers and demultiplexers may employ a series of Mach-Zehnder interferometers to route optical signals of different wavelengths into a common optical fiber channel. Mach-Zehnder interferometers typically have two beam splitters or other optical coupling elements and two optical paths extending between the beam splitters (also referred herein as "arms"). The Mach-Zehnder interferometer can route optical signals to one of two outputs based on the interference of the optical signals travelling down each arm at the second beam splitter, which can be adjusted by introducing a relative phase shift in the optical signal traveling down one arm versus the other arm. For example, a Mach-Zehnder interferometer may introduce this phase shift by having a length of one of the arms be longer than the length of the other arm. In other examples, the phase shift may be introduced by additionally or alternatively using thermal phase shifters or PN doped phase shifters The Mach-Zehnder interferometer can be fabricated to have a particular free spectral range (FSR), which depends on path length difference between the two arms and the group refractive index of the waveguides in each arm and defines which wavelengths of optical signals can be routed to a particular output without interference. In that way, a Mach-Zehnder interferometer can be fabricated to route a series of distinct wavelengths of light to the same output.

The inventors have recognized and appreciated that conventional Mach-Zehnder interferometers may be sensitive to a number of different process and environmental variations, undermining the ability of the Mach-Zehnder interferometer to properly route the optical signals with minimal signal loss. For example, the relative phase shift introduced by one arm of the Mach-Zehnder interferometer may be affected by variations in the width and/or height of the phase shifting segments of the arm caused by the manufacturing process, or may be affected by different environmental factors present in the environment in which the Mach-Zehnder interferometer is employed in such as temperature and pressure. As such, the wavelengths at which the Mach-Zehnder interferometer can operate without interference may shift, rendering the Mach-Zehnder interferometer less efficient or even unsuitable for a particular application utilizing a specific set of wavelengths for the optical signals. Accordingly, the inventors have developed Mach-Zehnder interferometers configured to be tolerant to various process and/or environmental variations.

According to some aspects, the tolerant Mach-Zehnder interferometer comprises an input coupler, an output coupler, and a plurality of optical arms extending between the input coupler and output coupler. The optical arms may include one or more phase shifting segments, wherein the arrangement and configuration of the phase shifting segments enable wavelength tolerance of the Mach-Zehnder interferometer to one or more process and/or environmental variations. For a single Mach-Zehnder interferometer to be tolerant to*N* process and/or environmental parameters (*s_{1,} s₂,* ... , *s_{N}*), in some embodiments, each arm may comprise 2^{*N*-1} phase shifting segments. For example, each Mach-Zehnder interferometer may be made tolerant to width and height variations of the various phase shifting segments caused by the manufacturing process and/or environmental parameters such as temperature and pressure. As applied to wavelength division multiplexers and demultiplexers, each multiplexer or demultiplexer may include a plurality of tolerant Mach-Zehnder interferometers. When each Mach-Zehnder interferometer is independently tolerant to the various process and/or environmental variations, the ensemble of Mach-Zehnder interferometers that make up the multiplexer/demultiplexer is similarly tolerant.

To make each Mach-Zehnder interferometer tolerant to various process and/or environmental variations, the phase shifting segments in each arm may be fabricated to satisfy various conditions. Each phase shifting segment in the first arm may form a corresponding pair of phase shifting segments with a phase shifting segment in the second arm. In that way, symmetry can be maintained such that the phase shift caused by different process and environmental variations is the same in each arm so that the relative phase shift between the two arms remains the same. The center wavelength of each wavelength channel of the Mach-Zehnder interferometer may depend on the total phase difference between the two arms of a Mach-Zehnder interferometer, and may be given by: $ϕ \left({s}_{1},{s}_{2},…..,{s}_{N},λ\right) = {\sum }_{m = 1}^{M} {β}_{1 , m} \left({s}_{1},{s}_{2},…..,{s}_{N},λ\right) {L}_{{a}_{m}} - {\sum }_{m = 1}^{M} {β}_{{2}_{m}} \left({s}_{1},{s}_{2},…..,{s}_{N},λ\right) {L}_{{b}_{m}}$ Equation 1 where subscript *a* and *b* denote the first arm and second arm of the Mach-Zehnder interferometer respectively, *m* denotes the phase shifting segment in the arm, λ is the wavelength of the optical signal propagating through the arms, and β is the known propagation constant of the phase shifting segment.

To be tolerant to different process and/or environmental parameters, the following condition may be satisfied: $\frac{\partial ϕ}{\partial {s}_{i}} = 0 , i = 1 , … , N$ Equation 2 which, when applied to Equation 1 may yield: ${\sum }_{n = 1}^{N} \left({\sum }_{m = 1}^{M} \frac{\partial {n}_{{a}_{m}}}{\partial {s}_{n}} {L}_{{a}_{m}}-{\sum }_{m = 1}^{M} \frac{\partial {n}_{{b}_{m}}}{\partial {s}_{n}} {L}_{{b}_{m}}\right) Δ {s}_{n} = 0$ Equation 3 where *N* is the total number of parameters the Mach-Zehnder interferometer is to be tolerant to and *n* is the refractive index of the particular phase shifting segment. In some embodiments, the condition in Equation 2 may be minimized to be below a threshold (e.g., $\frac{\partial ϕ}{\partial {s}_{i}} < {X}_{threshold}$) , rather than being completely eliminated. Because the dependence of the effective refractive index n on various parameters for a particular phase shifting segment-made of a particular material and of particular dimensions-are known, the only unknowns in Equation 3 are *L_{aₘ}* and *L_{bₘ}.* Given the free spectral range (FSR) equation for a Mach-Zehnder interferometer: ${FSR}_{o} = \frac{{λ}^{2}}{{ng}_{{a}_{m}} {L}_{{a}_{m}} - {ng}_{{b}_{m}} {L}_{{b}_{m}}} ; \frac{1}{{FSR}_{total}} = \frac{s}{{FSR}_{o}} + \frac{q}{{FSR}_{1}} + ⋯$ Equation 4 where Δ*L* is the path length difference (*L_{aₘ} - L_{bₘ}*) between the two arms, and s and *q* are scaling factors for the lengths of different phase shifting segments. Given the two equations, the lengths of the phase shifting segments can be determined so that the condition given by Equation 2 may be satisfied.

To provide tolerance for a single process or environmental parameter (e.g., N = 1), Equation 3 can be simplified to: $\left(\frac{\partial {n}_{{a}_{m}}}{\partial {s}_{1}}{L}_{{a}_{m}}-\frac{\partial {n}_{{b}_{m}}}{\partial {s}_{1}}{L}_{{b}_{m}}\right) Δ {s}_{1} = 0$ for each phase shifting segment (*m* = *1, 2, ...* , *M*). As such, the lengths of each corresponding pair of phase shifting segments can be determined to make the phase shifting segment tolerant to the first process or environmental parameter. In some embodiments, the condition in simplified Equation 3 may be minimized to be below a threshold, rather than being completely eliminated. For example: $\left(\frac{\partial {n}_{{a}_{m}}}{\partial {s}_{1}}{L}_{{a}_{m}}-\frac{\partial {n}_{{b}_{m}}}{\partial {s}_{1}}{L}_{{b}_{m}}\right) {Δs}_{1} = {δ}_{λ} ≪ 1 nm$ where *δ_{λ}* is the wavelength shift caused by the variations of the first parameter Δs₁. In some embodiments, the threshold may be 1 nm.

In some embodiments, to expand the tolerance to a second process or environmental parameter, two adjacent corresponding pairs may be sized and configured to provide tolerance. When *N* = 2, Equation 3 can be simplified to: $\left(\frac{\partial {n}_{{a}_{{m}_{1}}}}{\partial {s}_{2}}{L}_{{a}_{{m}_{1}}}-\frac{\partial {n}_{{b}_{{m}_{1}}}}{\partial {s}_{2}}{L}_{{b}_{{m}_{1}}}\right) Δ {s}_{2} + \left(\frac{\partial {n}_{{a}_{{m}_{2}}}}{\partial {s}_{2}}{L}_{{a}_{{m}_{2}}}-\frac{\partial {n}_{{b}_{{m}_{2}}}}{\partial {s}_{2}}{L}_{{b}_{{m}_{2}}}\right) Δ {s}_{2} ≪ 1 nm$ where *m₁* corresponds to a first corresponding pair of phase shifting segments and *m₂* corresponds to a second, adjacent corresponding pair of phase shifting segments. Since ${L}_{{a}_{{m}_{1}}}$ and ${L}_{{b}_{{m}_{1}}}$ have already been determined to provide the first tolerance, the only unknowns in the simplified Equation 3 are ${L}_{{a}_{{m}_{2}}}$ and ${L}_{{b}_{{m}_{2}}}$. In that way, the two lengths can similarly be determined to render the adjacent pair of corresponding pairs of phase shifting segments tolerant to the second process or environmental parameter.

The methods for providing the first two tolerances can similarly be expanded to provide tolerance to the Mach-Zehnder interferometer for many such process or environmental parameters, including, but not limited to, width and height of the phase shifting segments, temperature, and pressure. In some embodiments, to provide tolerance for *N* different parameters, the Mach-Zehnder interferometer may comprise 2^{*N*-1} corresponding pairs of phase shifting segments.

However, in some embodiments, the techniques described above may be used in conjunction with other techniques for providing tolerance to some or all of the parameters. For example, the technique outlined above may be utilized to provide height and width tolerance. The Mach-Zehnder interferometer may further be implemented on a temperature-insensitive material (e.g., silicon nitride) to provide temperature tolerance to the Mach-Zehnder interferometer without having to determine dimensions for additional corresponding pairs of phase shifting segments. However, in some embodiments, temperature tolerance may be provided in the same manner as other tolerances so that the Mach-Zehnder interferometer may be made material agnostic.

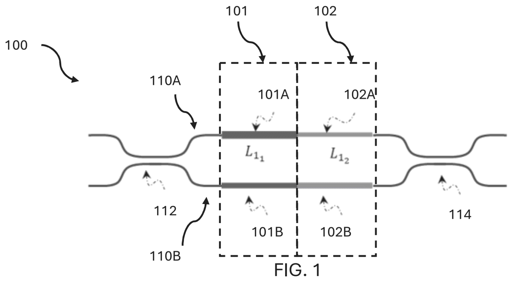

FIG. 1 shows an example Mach-Zehnder interferometer 100 being tolerant to process and/or environmental variations, according to some embodiments. In the illustrated embodiment, Mach-Zehnder interferometer 100 includes input coupler 112, output coupler 114, first arm 110A, and second arm 110B extending between input coupler 112 and output coupler 114. First arm 110A comprises two phase shifting segments 101A and 102A, and second arm 110B comprises two phase shifting segments 101B and 102B. In some embodiments, each of phase shifting segments 101A and 102A may form a corresponding pair of phase shifting segments 101 and 102. In that way, as described above, Mach-Zehnder interferometer 100 may be made tolerant to two process and/or environmental variations, for example, height and width tolerant.

Phase shifting segments 101A-102B may be configured in any suitable manner to provide the tolerance to various process and/or environmental variations. For example, in some embodiments, each of phase shifting segments may be formed of the same material. In some embodiments, the phase shifting segments may be formed of silicon nitride or any other suitable material. In some embodiments, different phase shifting segments may be formed of different materials. For example, corresponding pair 101 may be formed of a first material (e.g., silicon nitride) while corresponding pair 102 may be formed of a second material (e.g., lithium nitride). In other examples, phase shifting segment 101A may be formed of a different material than phase shifting segment 101B.

For any suitable material (or combination of materials), Equation 3 above may be used to determine the dimensions of the phase shifting segments in each corresponding pair to make each corresponding pair tolerant to a first process or environmental parameter. For example, because a material's index of refraction dependence on a particular parameter is known, phase shifting segment 101A may be formed having a first length Lₐ₁. In that way, Equation 3 may be evaluated to determine a second length Lₐ₂ of corresponding phase shifting segment 101B so that the corresponding pair 101 may be made tolerant to the specific parameter. As described above, Equation 3 may be subsequently evaluated to determine the dimensions of the phase shifting segments to make the ensemble of phase shifting segments tolerant a second process and/or environmental parameter. For example, by evaluating Equation 3 to determine the relative lengths of Lₐ₁, L_{b1}, Lₐ₂, and L_{b2}, the dimensions of each of phase shifting segments 101A-102B can be adjusted to make the adjacent corresponding pairs 101 and 102 tolerant to a second process and/or environmental parameter relative to each other.

In some embodiments, the first parameter may be width variations along the phase shifting segment caused by defects in the manufacturing process and the second parameter may be height variations of the phase shifting segments caused by defects in the manufacturing process. However, the technology is not limited in this manner, and the Mach-Zehnder interferometer may be made tolerant to any two suitable parameters, in any order. For example, the first parameter may be height tolerance and the second parameter may be width tolerance. In other examples, the first parameter may be an environmental parameter such as temperature or pressure variations and the second parameter may be a process parameter such as height or width tolerance.

In the illustrated embodiment, Mach-Zehnder interferometer 100 may be made tolerant to two process and/or environmental variations by determining the dimensions of phase shifting segments 101A-102B. To be tolerant to more process and environmental variations, more phase shifting segments may be included, the dimensions of which may be determined according to Equation 3 as was done with the first two parameters. However, in some embodiments, Mach-Zehnder interferometer 100 may be made tolerant to process and/or environmental variations by being formed on insensitive materials. For example, in some embodiments, rather than introducing additional phase shifting segments, Mach-Zehnder interferometer 100 may be made tolerant to temperature variations by being formed on a temperature-insensitive silicon photonic substrate. In some embodiments, the temperature-insensitive silicon photonic substrate is formed of silicon nitride.. In some embodiments, the silicon photonic substrate may be made temperature-insensitive by including a cladding material. The cladding material may have a temperature coefficient opposite that of the silicon photonic substrate to mitigate temperature sensitivity.

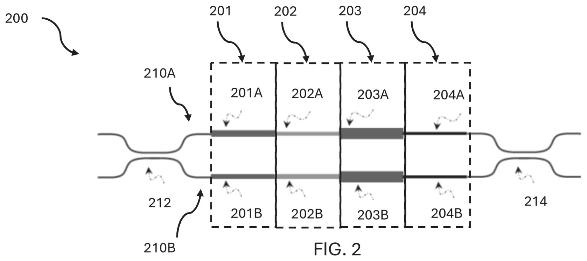

FIG. 2 shows example Mach-Zehnder interferometer 200 being tolerant to process and/or environmental variations, according to some embodiments. As noted above, tolerance for more process and/or environmental parameters or variations may be provided by the inclusion of additional phase shifting segments, the dimensions of which can be determined according to Equation 3. In the illustrated embodiment, Mach-Zehnder interferometer 200 may be made tolerant to three process and/or environmental parameters. Mach-Zehnder interferometer 200.

Each corresponding pair of phase shifting segments 201-204 may be made tolerant to a first process and/or environmental parameter as described above with respect to FIG. 1. Then, each adjacent corresponding pair (e.g., adjacent pairs 201 and 202, 203 and 204) can be made tolerant with each other to a second process and/or environmental parameter as described with respect to FIG. 1.

Finally, the entire ensemble of corresponding pairs 201-204 may be made tolerant to a third process and/or environmental parameter by evaluating Equation 3 as simplified below to account for a third process and/or environmental parameter: $\begin{matrix}\left(\frac{\partial {n}_{{a}_{{m}_{1}}}}{\partial {s}_{3}}{L}_{{a}_{{m}_{1}}}-\frac{\partial {n}_{{b}_{{m}_{1}}}}{\partial {s}_{3}}{L}_{{b}_{{m}_{1}}}\right) Δ {s}_{3} + \left(\frac{\partial {n}_{{a}_{{m}_{2}}}}{\partial {s}_{3}}{L}_{{a}_{{m}_{2}}}-\frac{\partial {n}_{{b}_{{m}_{2}}}}{\partial {s}_{3}}{L}_{{b}_{{m}_{2}}}\right) Δ {s}_{3} \\ + \left(\frac{\partial {n}_{{a}_{{m}_{3}}}}{\partial {s}_{3}}{L}_{{a}_{{m}_{3}}}-\frac{\partial {n}_{{b}_{{m}_{3}}}}{\partial {s}_{3}}{L}_{{b}_{{m}_{3}}}\right) Δ {s}_{3} + \left(\frac{\partial {n}_{{a}_{{m}_{4}}}}{\partial {s}_{3}}{L}_{{a}_{{m}_{4}}}-\frac{\partial {n}_{{b}_{{m}_{4}}}}{\partial {s}_{3}}{L}_{{b}_{{m}_{4}}}\right) Δ {s}_{3} = 0 .\end{matrix}$

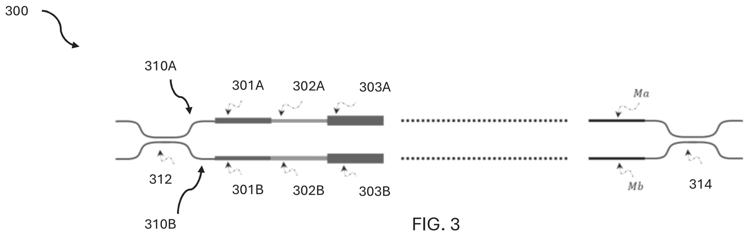

The above described iterative evaluation process can be expanded and be used to manufacture a Mach-Zehnder interferometer to be tolerant to *N* process and/or environmental parameters. FIG. 3 shows an example Mach-Zehnder interferometer 300 being tolerant to process and/or environmental variations, according to some embodiments. In the illustrated embodiment, Mach-Zehnder interferometer includes *M* corresponding pairs of phase shifting segments (301, 302, ... , M). In some embodiments, to be tolerant to *N* process and/or environmental parameters, Mach-Zehnder interferometer 300 may include *M* = 2^{*N*-1} corresponding pairs of phase shifting segments (e.g., *N* = 3, *M* = 4; *N* = 4, *M* = 8; *N* = 5, *M* = 6 ... ). In that way, Equation 3 may be used to evaluate the dimensions of the various phase shifting segments so that Mach-Zehnder interferometer is made tolerant to *N* process and/or environmental parameters.

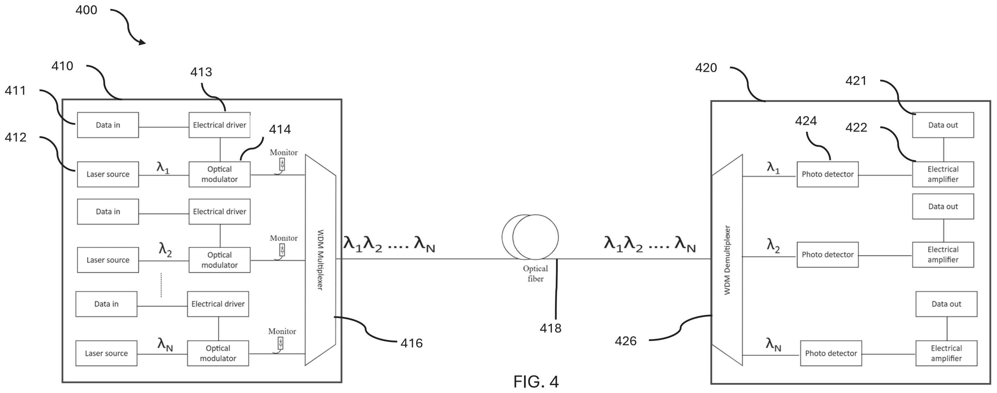

As noted above, the tolerant Mach-Zehnder interferometers described herein may be implemented as part of a photonic system to facilitate one or more functions of the photonic system. For example, Mach-Zehnder interferometers may be used in a photonic system for amplitude or phase modulation of incoming optical signals and/or multiplexing and demultiplexing functions. FIG. 4 shows an example photonic system 400 optically coupling two photonic integrated circuits (PICs) employing wavelength division multiplexers and demultiplexers, according to some embodiments. In the illustrated embodiment, photonic system 400 includes a first PIC 410, second PIC 420, and an optical fiber 418 optically coupling first PIC 410 and second PIC 420.

First PIC 410 is configured to transmit optical signals of photonic system 400 to second PIC 420. In some embodiments, the optical signals may be generated by modulating the amplitude of light provided by a light source such as laser source 412. Data received at a data module 411 may cause an electrical driver 413 to control optical modulator 414. By controlling optical modulator 414, the optical signal received from laser source 412 may be encoded with information indicative of the data received by data module 411, for example, by modulating the amplitude of the optical signal over time. In some embodiments, optical modulators 414 may be implemented using Mach-Zehnder interferometers described herein. To control the modulation, the Mach-Zehnder interferometers used for optical modulators may include thermal phase shifters and/or PN junction phase shifters to provide slow or fast modulation, respectively.

In the illustrated embodiment, first PIC 410 includes a plurality of data modules 411, electrical drivers 413, optical modulators 414, and laser sources 412. Each of laser sources 412 may be configured to generate light at a different wavelength (e.g., λ₁, λ₂, ... , λ_{N}). In that way, first PIC 410 may encode different portions of received data in optical signals having different wavelengths. When the optical signals have different wavelengths, they may be transmitted through optical fiber 418 in any suitable manner without interfering with other optical signals. For example, the different optical signals may be transmitted through optical fiber 418, simultaneously, near-simultaneously, or in an interleaved manner, with minimal interference between the different optical signals.

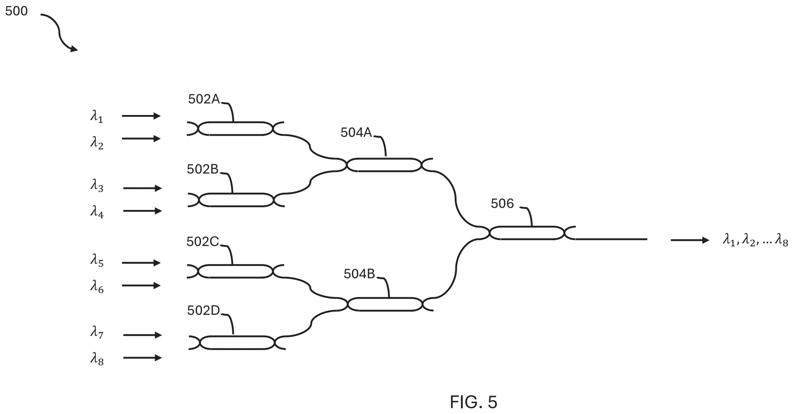

To facilitate transmission of the optical signals through the same optical fiber 418, first PIC 410 includes a wavelength division multiplexer (WDM) 416. WDM 416 may be configured to receive optical signals of different wavelengths from optical modulator(s) 414 and combine the optical signals into a combined optical signal. In some embodiments, WDM 416 may include a plurality of tolerant Mach-Zehnder interferometers as described herein to perform the wavelength division multiplexing functions as described further herein with respect to FIG. 5.

WDM 416 may be configured to support multiple wavelength "channels" to combine optical signals having wavelengths associated with each channel. For example, WDM 416 may be configured to perform coarse WDM supporting 18 different wavelength channels from 1270nm to 1610nm with a channel separation of 20nm. Each of the incoming optical signals may have a wavelength at a different channel of WDM 416. However, WDM 416 may be configured in any suitable manner to support any suitable range of wavelength channels, including dense wavelength division multiplexing (supporting up to 80 channels) or ultra-dense wavelength division multiplexing (supporting up to or more than 160 channels) and may operate in any suitable range of frequencies.

Second PIC 420 is configured to receive the optical signals from first PIC 420 through optical fiber 418. Second PIC 420 may include one or more photodetectors 424 configured to generate an electrical signal based on a detected optical signal, one or more data modules 421 for processing or transmitting the received data encoded in the optical signals detected by photodetectors 424, and one or more electrical amplifiers 422 to facilitate processing or transmission of the received data.

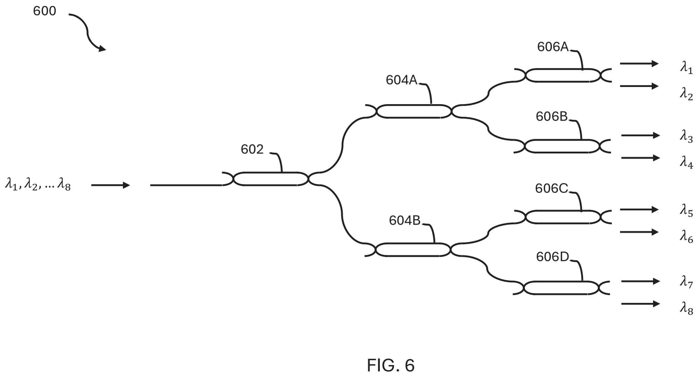

Having received a combined optical signal from the output of WDM 416, second PIC 420 may further include a demultiplexer 426 configured to receive the combine optical signal and split the combined optical signal into a plurality of output optical signals based on the different wavelengths that make up the combined optical signal. For example, demultiplexer 426 may split out an output optical signal of a first wavelength λ₁ and provide the output optical signal to a first photodetector 424, and an output optical signal of a second wavelength λ₂ and provide the output optical signal to a second photodetector 424. In that way, the data encoded in each optical signal by optical modulators 414 can be separated and transformed into an output electrical signal by respective photodetectors 424. Similar to WDM 416, demultiplexer 426 may include a plurality of tolerant Mach-Zehnder interferometers as described herein to perform the demultiplexing functions of demultiplexer 426 as further described below with respect to FIG. 6.

Although in the illustrated embodiment, first PIC 410 is configured to transmit optical signals to second PIC 420 via optical fiber 416, the technology is not limited in this manner. For example, first PIC 410 and second PIC 420 may be configured to additionally or alternatively transmit and/or receive optical signals as described above. Further, additional optical fibers may be utilized to optically couple first PIC 410, second PIC 420, and any other PIC of photonic system 400 not pictured.

Photonic system 400 may be configured to conform to one or more industry defined optical signal transmission standards. Example standards include 400Gb/s optical transceivers based on 4 lane x 100 Gb/s Pulse Amplitude Modulation 4-level (PAM4) signaling. The four lanes may be 4 parallel single mode (PSM) fibers for a 500 meter reach and 4 wavelength division multiplexing channels for 2 and 10 kilometer reaches on the Local Area Network WDM (LAN WDM) (channel spacing of approximately 800 GHz/4.5 nm) or coarse WDM (spacing of approximately 20 nm). Typical optical connections described above and further herein may operate in the O-band in which dispersion of optical signals at different wavelength propagating through a fiber is minimized. The O-band wavelength may center around 1300 nm.

FIG. 5 shows an example wavelength division multiplexer (WDM) 500 employing a plurality of process and/or environmental tolerant Mach-Zehnder interferometers, according to some embodiments. In the illustrated embodiment, WDM 500 includes a plurality a tolerant Mach-Zehnder interferometers arranged in a cascaded configuration having a first stage 502, second stage 504, and third stage 506. In that way, WDM 500 supports the multiplexing of eight wavelengths. However, WDM 500 may be configured in any suitable manner to support more or less wavelengths, including but not limited to, adding additional stages or removing the first and/or second stages.

First stage 502 may include four tolerant Mach-Zehnder interferometers 502A-502D. Each Mach-Zehnder interferometer 502A-502D may include two inputs to receive to optical signals of different wavelengths. For example, Mach-Zehnder interferometer 502A may receive a first optical signal λ₁ at a first input and a second optical signal λ₂ at a second input. Mach-Zehnder interferometer 502A may be configured to have a particular free spectral range (FSR) so as to route both optical signals to the same output. In that way, both input optical signals may be combined into the same output (e.g., as an intermediary optical signal). The intermediary optical signal output from Mach-Zehnder interferometer 502A may be transmitted to a second stage interferometer (e.g., 504A). Each of the first stage interferometers 502B-D may be configured in a similar manner, each combining two of the eight input optical signals depicted in the illustrated embodiment.

Second stage 504 may include two tolerant Mach-Zehnder interferometers 504A-504B. Each of the inputs of Mach-Zehnder interferometers 504A-504B may be coupled to the relevant output of a Mach-Zehnder interferometer 502A-502D from first stage 502. In that way, each second stage interferometer is configured to receive two of the intermediary optical signals output by first stage 502, having a total of up to four different wavelengths. As in the first stage, each Mach-Zehnder interferometer may be configured to have a FSR so as to route both intermediary optical signals to the same output. For example, each of Mach-Zehnder interferometers of WDM 500 may be configured with the same FSR so as to maintain the same operating wavelengths throughout the cascaded arrangement of WDM 500.

Third stage 506 may include a single tolerant Mach-Zehnder interferometer 506. The Mach-Zehnder interferometer 506 may include two inputs coupled to the respective outputs of the second stage interferometers 504A-504B. In that way, Mach-Zehnder interferometer 506 may receive and combine two second stage intermediary optical signals into a single combined optical signal to be provided as output. The combined optical signal may include optical signals having up to all eight of the wavelengths depicted.

Although WDM 500 is depicted as having three stages to support eight wavelength channels, it can be appreciated that WDM 500 may be modified to support more or less channels to conform to the aforementioned industry defined multiplexing standards, coarse WDM, dense WDM, and/or ultra-dense WDM. For example, one or more additional stages may be added to support additional wavelength channels, or stages may be removed to support only two or four wavelength channels. Further, each Mach-Zehnder interferometer may be configured to have an FSR to support any of the multiplexing schemes and/or industry defined standards described above.

Further, since WDM 500 comprises tolerant Mach-Zehnder interferometers as described above with respect to FIGs. 1-3, WDM 500 may similarly be made tolerant to the various process and/or environmental parameters that the Mach-Zehnder interferometers are made tolerant to. For example, when each Mach-Zehnder interferometer is made height, width, temperature, and/or other suitable parameter tolerant, the ensemble of Mach-Zehnder interferometers that make up WDM 500 will also be tolerant to those parameters.

FIG. 6 shows an example wavelength division demultiplexer 600 employing a plurality of process and/or environmental tolerant Mach-Zehnder interferometers, according to some embodiments. In the same manner as described above with respect to WDM 500 of FIG. 5, demultiplexer 600 include a first stage 602, second stage 604, and third stage 606 of Mach-Zehnder interferometers configured to split an input combined optical signal into a plurality of optical signals having different wavelengths.

First stage 602 may include a single tolerant Mach-Zehnder interferometer 602 as described herein. Mach-Zehnder interferometer 602 may be configured to receive an input combined optical signal (e.g., from optical fiber 418) and split the combined optical signal into two outputs. For example, Mach-Zehnder interferometer 602 may be configured to have an FSR to enables the interferometer to split the combined optical signal into a first intermediary signal (e.g., including λ₁, λ₂, λ₃, and λ₄, or including λ₁, λ₃, λ_{5,} and λ_{7,} or any suitable combination of incident optical signals) to be output to the second stage at a first output and a second intermediary signal (e.g., including λ₅, λ₆, λ₇, and λ_{8,} , or including λ₂, λ₄, λ_{6,} and λ_{8,} or any suitable combination of incident optical signals) to be output to the second stage at a second output. Second and third stages 604 and 606 may be configured to further split the intermediary signals further so that the optical signal of each wavelength may be output individually.

As with WDM 500, although demultiplexer 600 is depicted as having three stages to support eight wavelength channels, it can be appreciated that demultiplexer 600 may be modified to support more or less channels to conform to the aforementioned industry defined multiplexing standards, coarse WDM, dense WDM, and/or ultra-dense WDM. For example, one or more additional stages may be added to support additional wavelength channels, or stages may be removed to support only two or four wavelength channels. Further, each Mach-Zehnder interferometer may be configured to have an FSR to support any of the multiplexing schemes and/or industry defined standards described above.

Further, since demultiplexer 600 comprises tolerant Mach-Zehnder interferometers as described above with respect to FIGs. 1-3, demultiplexer 600 may similarly be made tolerant to the various process and/or environmental parameters that the Mach-Zehnder interferometers are made tolerant to. For example, when each Mach-Zehnder interferometer is made height, width, temperature, and/or other suitable parameter tolerant, the ensemble of Mach-Zehnder interferometers that make up demultiplexer 600 will also be tolerant to those parameters.

Having thus described several aspects and embodiments of the technology of this application, it is to be appreciated that various alterations, modifications, and improvements will readily occur to those of ordinary skill in the art. Such alterations, modifications, and improvements are intended to be within the spirit and scope of the technology described in the application. It is, therefore, to be understood that the foregoing embodiments are presented by way of example only and that, within the scope of the appended claims and equivalents thereto, inventive embodiments may be practiced otherwise than as specifically described. In addition, any combination of two or more features, systems, articles, materials, and/or methods described herein, if such features, systems, articles, materials, and/or methods are not mutually inconsistent, is included within the scope of the present disclosure.

Also, as described, some aspects may be embodied as one or more methods. The acts performed as part of the method may be ordered in any suitable way. Accordingly, embodiments may be constructed in which acts are performed in an order different than described, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, *i.e.,* elements that are conjunctively present in some cases and disjunctively present in other cases.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "approximately" and "about" may be used to mean within ±20% of a target value in some embodiments, within ±10% of a target value in some embodiments, within ±5% of a target value in some embodiments, and yet within ±2% of a target value in some embodiments. The terms "approximately" and "about" may include the target value.

In summary, a Mach-Zehnder interferometer includes a first waveguide having a first plurality of phase shifting segments and a second waveguide coupled to the first waveguide by a input coupler at a first end of the second waveguide and an output coupler at a second end of the second waveguide opposite the first end and having a second plurality of phase shifting segments. To minimize effects of process and/or environmental variations on the Mach-Zehnder interferometer the first and second waveguides may be made tolerant to various process and/or environmental variations. A first phase shifting segment of the first waveguide and a first phase shifting segment of the segment may form a corresponding pair, wherein the first corresponding pair is configured to provide wavelength tolerance to wavelength shifts of an optical signal propagating through the first and second waveguides caused by a first parameter.

The following embodiments are explicitly disclosed.

### Embodiment 1:

A Mach-Zehnder interferometer comprising:
a first waveguide comprising a first plurality of phase shifting segments; and
a second waveguide coupled to the first waveguide by a input coupler at a first end of the second waveguide and an output coupler at a second end of the second waveguide opposite the first end, the second waveguide comprising a second plurality of phase shifting segments, wherein:
   a first segment of the first plurality of phase shifting segments and a first segment of the second plurality of phase shifting segments form a first corresponding pair, wherein the first corresponding pair is configured to provide wavelength tolerance to wavelength shifts of an optical signal propagating through the first and second waveguides caused by a first parameter.

### Embodiment 2:

The Mach-Zehnder interferometer of embodiment 1, wherein:
the first parameter comprises variations in widths of the phase shifting segments of the corresponding pair.

### Embodiment 3:

The Mach-Zehnder interferometer of embodiment 2, wherein:
the first segment of the first plurality of phase shifting segments in the first corresponding pair comprises a first width and a first length; and
the first segment of the second plurality of phase shifting segments in the first corresponding pair comprises a second width and a second length, wherein the second width and/or second length are determined based on the first width and first length to provide the wavelength tolerance to the first parameter.

### Embodiment 4:

The Mach-Zehnder interferometer of one of embodiments 1 to 3, wherein:
a second segment of the first plurality of phase shifting segments and a second segment of the second plurality of phase shifting segments form a second corresponding pair; and
the first corresponding pair and second corresponding pair are configured to provide wavelength tolerance to wavelength shifts of the optical signal caused by a second parameter.

### Embodiment 5:

The Mach-Zehnder interferometer of embodiment 4, wherein:
the second parameter comprises variations in heights of the phase shifting segments of the first and second corresponding pairs.

### Embodiment 6:

The Mach-Zehnder interferometer of embodiment 4 or 5, wherein:
the first and second waveguides include a plurality of corresponding pairs of segments from the first plurality of phase shifting segments and the second plurality of phase shifting segments; and
the plurality of corresponding pairs are configured to provide wavelength tolerance to wavelength shifts of the optical signal caused by a third parameter based on an ensemble comprising at least a subset of the plurality of corresponding pairs.

### Embodiment 7:

The Mach-Zehnder interferometer of embodiment 6, wherein:
the third parameter comprises temperature.

### Embodiment 8:

The Mach-Zehnder interferometer of one of embodiments 4 to 7, wherein:
the Mach-Zehnder interferometer is formed on a temperature-insensitive material.

### Embodiment 9:

The Mach-Zehnder interferometer of embodiment 8, wherein:
the temperature-insensitive material comprises silicon nitride.

### Embodiment 10:

The Mach-Zehnder interferometer of embodiment 8 or 9, wherein:
the temperature-insensitive material is a silicon substrate having a first temperature coefficient and comprising a cladding material, wherein the cladding material has a second temperature coefficient opposite the first temperature coefficient.

### Embodiment 11:

A wavelength division multiplexer comprising:
a plurality of Mach-Zehnder interferometers each configured to receive optical signals of different wavelengths to be combined into a single output, wherein:
at least a first Mach-Zehnder interferometer of the plurality of Mach-Zehnder interferometers is the Mach-Zehnder interferometer of one of embodiments 1 to 10, preferably the at least one first Mach-Zehnder interferometer of the plurality of Mach-Zehnder interferometers comprising:
a plurality of Mach-Zehnder interferometers each configured to receive optical signals of different wavelengths to be combined into a single output, wherein the at least one first Mach-Zehnder interferometer of the plurality of Mach-Zehnder interferometers comprises:
the first waveguide comprising the first plurality of phase shifting segments; and
the second waveguide coupled to the first waveguide by the input coupler at the first end of the second waveguide and the output coupler at the second end of the second waveguide opposite the first end, the second waveguide comprising the second plurality of phase shifting segments, wherein the first segment of the first plurality of phase shifting segments and the first segment of the second plurality of phase shifting segments form the first corresponding pair, wherein the first corresponding pair is configured to provide wavelength tolerance to wavelength shifts of the optical signal propagating through the first and second waveguides caused by the first parameter.

### Embodiment 12:

A wavelength division multiplexer comprising:
a plurality of Mach-Zehnder interferometers each configured to receive optical signals of different wavelengths to be combined into a single output, wherein:
a first Mach-Zehnder interferometer of the plurality of Mach-Zehnder interferometers comprises a first waveguide and a second waveguide having a plurality of corresponding pairs of phase shifting segments; and
the first Mach-Zehnder interferometer is configured to be wavelength tolerant to wavelength shifts in optical signals caused by one or more parameters based at least in part on dimensions of the phase shifting segments of the corresponding pairs.

### Embodiment 13:

The wavelength division multiplexer of embodiment 11 or 12, wherein:
the one or more parameters comprise at least one of: width variations of the phase shifting segments, height variations of the phase shifting segments, temperature of an environment in which the multiplexer is operating, and/or pressure of the environment.

### Embodiment 14:

The wavelength division multiplexer of one of embodiments 11 to 13, wherein:
the wavelength division multiplexer is formed on a temperature-insensitive material.

### Embodiment 15:

The wavelength division multiplexer of embodiment 14, wherein:
the temperature-insensitive material comprises silicon nitride.

### Embodiment 16:

The wavelength division multiplexer of embodiment 14 or 15, wherein:
the temperature-insensitive material is a silicon substrate having a first temperature coefficient and comprising a cladding material, wherein the cladding material has a second temperature coefficient opposite the first temperature coefficient.

### Embodiment 17:

A demultiplexer, comprising:
the wavelength division multiplexer of one of embodiments 11 to 16; or
a plurality of Mach-Zehnder interferometers each configured to receive optical signals having light of different wavelengths and configured to separate the optical signal into a plurality of outputs based on the different wavelengths, wherein at least a first Mach-Zehnder interferometer of the plurality of Mach-Zehnder interferometers is the Mach-Zehnder interferometer of one of embodiments 1 to 10, preferably the at least one first Mach-Zehnder interferometer of the plurality of Mach-Zehnder interferometers comprising:
   the first waveguide and the second waveguide having a plurality of corresponding pairs of phase shifting segments; and the at least one first Mach-Zehnder interferometer is configured to be wavelength tolerant to wavelength shifts in optical signals caused by one or more parameters based at least in part on dimensions of the phase shifting segments of the corresponding pairs.

### Embodiment 18

A demultiplexer comprising:
a plurality of Mach-Zehnder interferometers configured to receive an optical signal having light of different wavelengths and configured to separate the optical signal into a plurality of outputs based on the different wavelengths, wherein:
a first Mach-Zehnder interferometer of the plurality of Mach-Zehnder interferometers comprises a first waveguide and a second waveguide having a plurality of corresponding pairs of phase shifting segments; and
the first Mach-Zehnder interferometer is configured to be wavelength tolerant to wavelength shifts in optical signals caused by one or more parameters based at least in part on dimensions of the phase shifting segments of the corresponding pairs.

### Embodiment 19:

The demultiplexer of embodiment 17 or 18, wherein:
the one or more parameters comprise at least one of: width variations of the phase shifting segments, height variations of the phase shifting segments, temperature of an environment in which the demultiplexer is operating, and/or pressure of the environment.

### Embodiment 20:

The demultiplexer of one of embodiments 17 to 19, wherein:
the demultiplexer is formed on a temperature-insensitive material.

### Embodiment 21:

The demultiplexer of embodiment 20, wherein:
the temperature-insensitive material comprises silicon nitride.

### Embodiment 22:

The demultiplexer of embodiment 20 or 21, wherein:
the temperature-insensitive material is a silicon substrate having a first temperature coefficient and comprising a cladding material, wherein the cladding material has a second temperature coefficient opposite the first temperature coefficient.

## Claims

1. A Mach-Zehnder interferometer comprising:
a first waveguide comprising a first plurality of phase shifting segments; and
a second waveguide coupled to the first waveguide by a input coupler at a first end of the second waveguide and an output coupler at a second end of the second waveguide opposite the first end, the second waveguide comprising a second plurality of phase shifting segments, wherein:
a first segment of the first plurality of phase shifting segments and a first segment of the second plurality of phase shifting segments form a first corresponding pair, wherein the first corresponding pair is configured to provide wavelength tolerance to wavelength shifts of an optical signal propagating through the first and second waveguides caused by a first parameter.

2. The Mach-Zehnder interferometer of claim 1, wherein:
the first parameter comprises variations in widths of the phase shifting segments of the corresponding pair.

3. The Mach-Zehnder interferometer of claim 2, wherein:
the first segment of the first plurality of phase shifting segments in the first corresponding pair comprises a first width and a first length; and
the first segment of the second plurality of phase shifting segments in the first corresponding pair comprises a second width and a second length, wherein the second width and/or second length are determined based on the first width and first length to provide the wavelength tolerance to the first parameter.

4. The Mach-Zehnder interferometer of one of claims 1 to 3, wherein:
a second segment of the first plurality of phase shifting segments and a second segment of the second plurality of phase shifting segments form a second corresponding pair; and
the first corresponding pair and second corresponding pair are configured to provide wavelength tolerance to wavelength shifts of the optical signal caused by a second parameter.

5. The Mach-Zehnder interferometer of claim 4, wherein the second parameter comprises variations in heights of the phase shifting segments of the first and second corresponding pairs; and/or
wherein the first and second waveguides include a plurality of corresponding pairs of segments from the first plurality of phase shifting segments and the second plurality of phase shifting segments, and wherein the plurality of corresponding pairs are configured to provide wavelength tolerance to wavelength shifts of the optical signal caused by a third parameter based on an ensemble comprising at least a subset of the plurality of corresponding pairs, the third parameter preferably comprising temperature.

6. The Mach-Zehnder interferometer of claim 4 or 5, wherein:
the Mach-Zehnder interferometer is formed on a temperature-insensitive material.

7. The Mach-Zehnder interferometer of claim 6, wherein at least one of:
the temperature-insensitive material comprises silicon nitride; and
the temperature-insensitive material is a silicon substrate having a first temperature coefficient and comprising a cladding material, wherein the cladding material has a second temperature coefficient opposite the first temperature coefficient.

8. A wavelength division multiplexer comprising:
a plurality of Mach-Zehnder interferometers each configured to receive optical signals of different wavelengths to be combined into a single output, wherein:
at least a first Mach-Zehnder interferometer of the plurality of Mach-Zehnder interferometers is the Mach-Zehnder interferometer of one of claims 1 to 7, preferably the at least one first Mach-Zehnder interferometer of the plurality of Mach-Zehnder interferometers comprising:
a plurality of Mach-Zehnder interferometers each configured to receive optical signals of different wavelengths to be combined into a single output, wherein the at least one first Mach-Zehnder interferometer of the plurality of Mach-Zehnder interferometers comprises:
the first waveguide comprising the first plurality of phase shifting segments; and
the second waveguide coupled to the first waveguide by the input coupler at the first end of the second waveguide and the output coupler at the second end of the second waveguide opposite the first end, the second waveguide comprising the second plurality of phase shifting segments, wherein the first segment of the first plurality of phase shifting segments and the first segment of the second plurality of phase shifting segments form the first corresponding pair, wherein the first corresponding pair is configured to provide wavelength tolerance to wavelength shifts of the optical signal propagating through the first and second waveguides caused by the first parameter.

9. A wavelength division multiplexer comprising:
a plurality of Mach-Zehnder interferometers each configured to receive optical signals of different wavelengths to be combined into a single output, wherein:
a first Mach-Zehnder interferometer of the plurality of Mach-Zehnder interferometers comprises a first waveguide and a second waveguide having a plurality of corresponding pairs of phase shifting segments; and
the first Mach-Zehnder interferometer is configured to be wavelength tolerant to wavelength shifts in optical signals caused by one or more parameters based at least in part on dimensions of the phase shifting segments of the corresponding pairs.

10. The wavelength division multiplexer of claim 8 or 9, wherein:
the one or more parameters comprise at least one of: width variations of the phase shifting segments, height variations of the phase shifting segments, temperature of an environment in which the multiplexer is operating, and/or pressure of the environment.

11. The wavelength division multiplexer of one of claims 8 to 10, wherein:
the wavelength division multiplexer is formed on a temperature-insensitive material.

12. The wavelength division multiplexer of claim 11, wherein at least one of:
the temperature-insensitive material comprises silicon nitride; and
the temperature-insensitive material is a silicon substrate having a first temperature coefficient and comprising a cladding material, wherein the cladding material has a second temperature coefficient opposite the first temperature coefficient.

13. A demultiplexer, comprising:
the wavelength division multiplexer of one of claims 8 to 12; or
a plurality of Mach-Zehnder interferometers each configured to receive optical signals having light of different wavelengths and configured to separate the optical signal into a plurality of outputs based on the different wavelengths, wherein at least a first Mach-Zehnder interferometer of the plurality of Mach-Zehnder interferometers is the Mach-Zehnder interferometer of one of claims 1 to 7, preferably the at least one first Mach-Zehnder interferometer of the plurality of Mach-Zehnder interferometers comprising:
the first waveguide and the second waveguide having a plurality of corresponding pairs of phase shifting segments; and the at least one first Mach-Zehnder interferometer is configured to be wavelength tolerant to wavelength shifts in optical signals caused by one or more parameters based at least in part on dimensions of the phase shifting segments of the corresponding pairs.

14. A demultiplexer comprising:
a plurality of Mach-Zehnder interferometers configured to receive an optical signal having light of different wavelengths and configured to separate the optical signal into a plurality of outputs based on the different wavelengths, wherein:
a first Mach-Zehnder interferometer of the plurality of Mach-Zehnder interferometers comprises a first waveguide and a second waveguide having a plurality of corresponding pairs of phase shifting segments; and
the first Mach-Zehnder interferometer is configured to be wavelength tolerant to wavelength shifts in optical signals caused by one or more parameters based at least in part on dimensions of the phase shifting segments of the corresponding pairs.

15. The demultiplexer of claim 13 or 14, wherein at least one of:
the one or more parameters comprise at least one of: width variations of the phase shifting segments, height variations of the phase shifting segments, temperature of an environment in which the demultiplexer is operating, and/or pressure of the environment; and
the demultiplexer is formed on a temperature-insensitive material,
the temperature-insensitive material preferably comprising silicon nitride and/or the temperature-insensitive material preferably being a silicon substrate having a first temperature coefficient and preferably comprising a cladding material with a second temperature coefficient opposite the first temperature coefficient.
